# EUROPEAN PATENT SPECIFICATION

(11) **EP 2 096 618 B1**
(45) Date of publication and mention of the grant of the patent: **23.10.2013**
(21) Application number: 08447014.5
(22) Date of filing: 28.02.2008
(51) Int. Cl.: G09F 7/18, F16B 2/10

(54) **Clamping system for a display device**
Klemmsystem für Anzeigevorrichtungen
Système de fixation pour dispositif d'affichage

(43) Date of publication of application: 02.09.2009
(73) Proprietor: Barco NV, 8500 Kortrijk (BE)
(72) Inventor: Meersman, Karim, 8610 Kortemark (BE); Ooghe, Koen, 9000 Gent (BE); Vreven, Koen, 9300 Aalst (BE)
(74) Representative: Bird, Ariane

(56) References cited:
- EP-A- 0 718 549
- DE-U1- 9 310 229
- FR-A- 2 660 025
- US-A- 5 836 558

## Description

### Technical field of the invention

The present invention relates to display devices. More particularly, the present invention relates to a clamping system for connecting a display device, e.g. a screen, to a support, to a method for making such a clamping system, to a method for connecting a display device, e.g. screen, to a support and to a display device system comprising a display device, e.g. screen connected to a support by using such clamping system.

### Background of the Invention

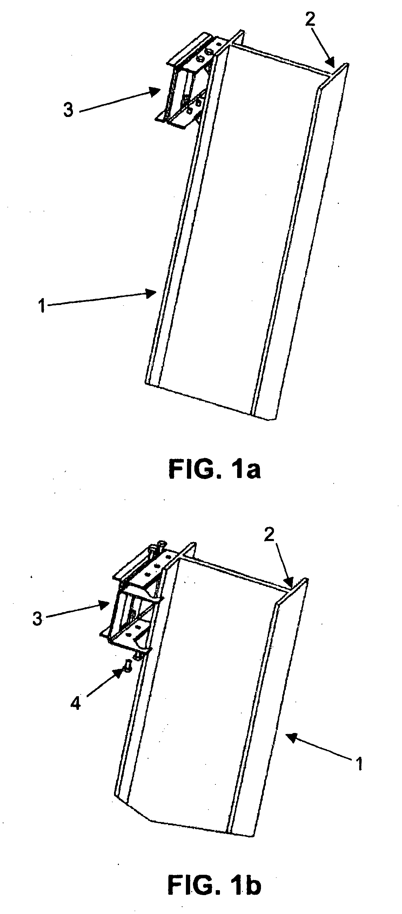

For particular application such as for example outdoor screens, e.g. outdoor LED screens, display devices, e.g. screens may need to be connected to frames or supports. Therefore, a clamping system may be used. A number of clamping systems is available in the field. US 5836558 and FR 2660025 disclose clamping systems for connecting a display device. A disadvantage of most known clamping systems is that they are mostly built up of separate parts such as bolts, nuts and/or washers, a clamping part and separate shim plates. As a result, the use of these known clamping systems is often time-consuming because they have a lot of different parts and consequently a lot of different fixations and regulations to be made. Furthermore, known clamping systems may only be suitable for being used with particular shapes of profiles. See Fig. 1 for an example. The profiles 1 have flanges 2 (see Fig. 1a). A particular clamping system 3 can only be used with one type (size) of flanges 2 as it has to fit to the flange 2 and thus has to have appropriate sizes tuned to the size of the flanges 2 of the profile 1. Furthermore, when the display device has to be moved along the profile 1, first, bolds 4 have be removed (see Fig. 1b), the screen has to be moved and bolds have to be replaced for again fixing the screen to the profile.

### Summary of the Invention

It is an object of embodiments of the present invention to provide good clamping systems for connecting a display device, e.g. a screen, to a support, methods for making such a clamping systems, methods for connecting a display device, e.g. screen, to a support and display device system comprising a display device, e.g. screen connected to a support using such a clamping systems.

It is an advantage of a clamping system according to embodiments of the present invention that it can be a one-piece system. With one-piece system is meant that the clamping system does not comprise parts to be manipulated as separate parts during use of the clamping systems. In other words, all parts necessary for connecting a display device, e.g. screen to a support are integrated in the clamping system according to embodiments of the invention. A clamping system according to embodiments of the invention is easy to handle and easy to use. A clamping system according to embodiments of the invention is compatible with different applications.

The above objective is accomplished by a method and device according to the present invention.

In a first aspect of the invention, a clamping system is provided for connecting a display device to a support. The clamping system comprises:
- a body adapted for being connected to the display device,
- a clamp for connecting the clamping system to the support, and
- closing means for closing the clamp when connecting the clamping system to the support, the closing means being integrated in the clamping system.

With being integrated in the clamping system is meant that the closing means is not a separate part but is part of the clamping system.

A clamping system according to embodiments of the present invention may be a one-piece system. With one-piece system is meant that the clamping system does not comprise separate parts or in other words that all parts necessary for connecting a display device, e.g. screen to a support can be interconnected or integrated in a clamping system according to embodiments of the invention, when applying the clamping system. A clamping system according to embodiments of the invention is easy to handle and easy to use. By using a clamping system according to embodiments of the invention, any display device can be connected to any kind of support, e.g. to any kind of I-beam. This makes a clamping system according to embodiments of the invention compatible with different applications.

The clamp may be pivotably mounted to the body such that it can move around a hinge from an open to a closed position.

According to embodiments of the invention, the clamping system may furthermore comprise shimming means comprising at least one integrated shim plate rotatably mounted around the closing means.

An advantage hereof is that a plurality of shim plates can be provided and those required can be moved to be in between the support and the body while those who are not needed can be kept positioned in the clamping system.

The closing means may extend from the body through an opening in the clamp.

The body of the clamping system may comprise sliding means for fitting in or on a support fixed to the display device such that the display device, e.g. screen can be moved in a horizontal direction, i.e. from a left to a right side or vice versa.

An advantage hereof is that the display device can be put in different positions.

At least one opening may be provided in the body

An advantage hereof is that by provision of at least one opening in the body less weight is provided to the clamping system.

According to embodiments of the invention, the clamping system may furthermore comprise a nut for putting the at least one shim plate in a fixed position.

According to embodiments of the invention, the closing means may comprise a threaded rod and at least one nut.

The clamping system according to the present invention comprises an integrated clamp opening means for keeping the clamp in an open position when not in use.

The clamp opening means may be a spring, e.g. a torsion spring.

In a further aspect, the present invention provides a display device system comprising a display device connected to a support using at least one clamping system according to embodiments of the present invention.

In yet a another aspect, the present invention provides a method for connecting a display device to a support. The method comprises:
- obtaining a clamping system comprising a clamp and an integrated closing means, and thereafter
- connecting one part of the clamping system to the display device, and
- connecting another part of the clamping system to the support by moving the clamp from an open position to a closed position by means of the integrated closing means.

Connecting one part of the clamping system to the display device may be performed by fitting a sliding means of the clamping system in or on a support which is fixed to the display device.

The clamping system may have a body and a shimming means comprising at least one shim plate and the method may furthermore comprise, before moving the clamp from an open position to a closed position by means of the integrated closing means, positioning at least one shim plate in between the support and the body of the clamping system.

In still a further aspect, the present invention provides a method for making a clamping system. The method comprises:
- obtaining a body adapted for being connected to a display device,
- providing a clamp for connecting the clamping system to a support, and
- providing closing means for closing the clamp when connecting the clamping system to the support.

Providing closing means is performed such that the closing means is integrated in the clamping system.

According to the invention, the method furthermore comprise providing a clamp opening means for keeping the clamp in an open position when not in use, wherein providing a clamp opening means is performed such that the clamp opening means is integrated in the clamping system.

Providing a clamp opening means may be performed by providing a spring, e.g. a torsion spring.

Providing a clamp may be performed by pivotably mounting the clamp to the body such that it can move around a hinge from an open to a closed position.

The method may furthermore comprise providing a shimming means comprising at least one integrated shim plate rotatably mounted around the closing means.

The method may furthermore comprise providing at least one opening in the body.

Providing closing means may be performed by providing a threaded rod and at least one nut.

In another aspect, the present invention provides a clamping system made by a method according to embodiments of the present invention.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable clamping systems and/or display devices.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 a and Fig. 1b show a prior art clamping system.
Fig. 2 and Fig. 3 show a clamping system according to an embodiment of the invention.
Fig. 4 shows a detail of a clamping system according to embodiments of the invention.
Fig. 5 shows another example of a clamping system according to an embodiment of the invention.
Fig. 6a and Fig. 6b show a clamping system according to an embodiment of the invention in an open position.
Fig. 7a and Fig. 7b show a clamping system according to an embodiment of the invention in a closed position.
Fig. 8 shows a display device system comprising a display device connected to a support by means of a clamping system according to embodiments of the present invention.
Fig. 9a and Fig. 9b show details of the display device system illustrated in Fig. 8.
Fig. 10 and Fig. 11 show details of a display device system comprising a display device connected to a support by means of a clamping system according to embodiments of the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

In a first aspect, the present invention provides a clamping system for connecting a display device, e.g. a screen to a support, e.g. to a frame, a profile or a stand. The clamping system comprises a body adapted for being connected to the display device, a clamp for connecting the clamping system to the support, closing means for closing the clamp when connecting the clamping system to the support, the closing means being integrated in the clamping system. It is an advantage of a clamping system according to embodiments of the present invention that it is a one-piece system. With one-piece system is meant that the clamping system does not comprise separate parts or in other words that all parts necessary for connecting a display device, e.g. screen to a support are integrated in the clamping system according to embodiments of the invention. It is an advantage of clamping systems according to embodiments of the invention is easy to handle and easy to use. By using a clamping system according to embodiments of the invention, any display device can be connected to any kind of support, e.g. to any kind of I-beam. This makes a clamping system according to embodiments of the invention compatible with different applications.

The clamping system advantageously also may comprise a clamp opening means, e.g. spring for keeping the clamp in an open position when not in use. Such a clamp opening means may be an integrated clamp opening means, integrated in the clamp system.

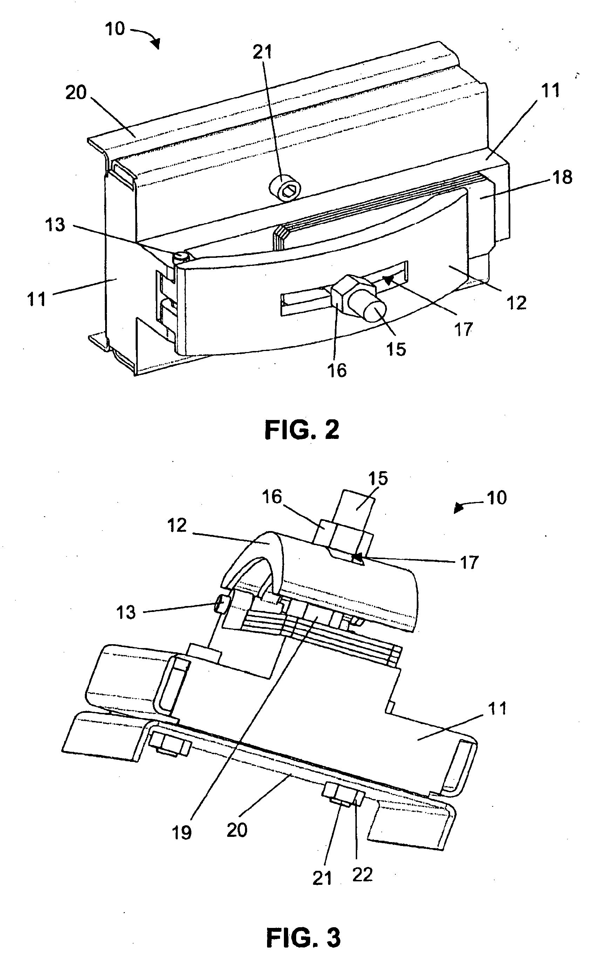

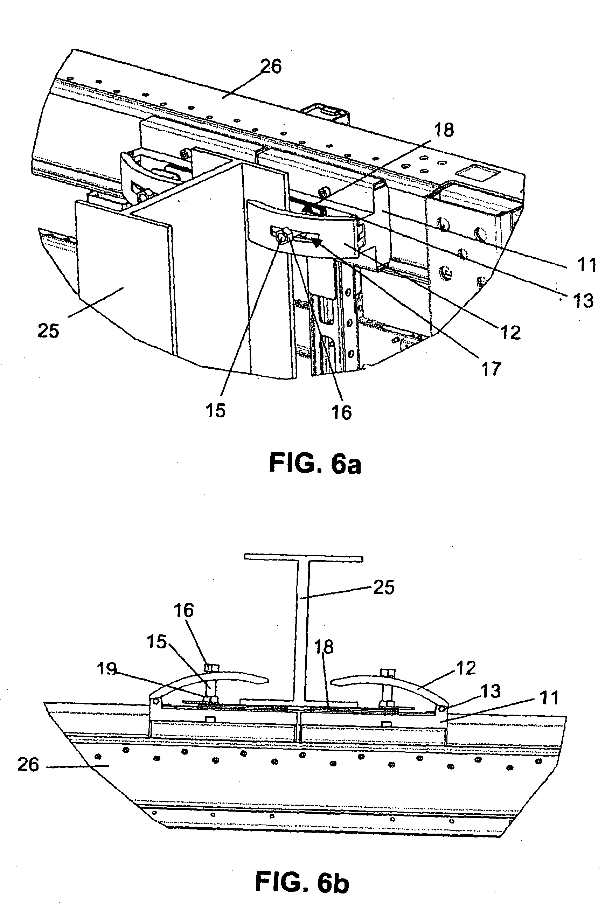

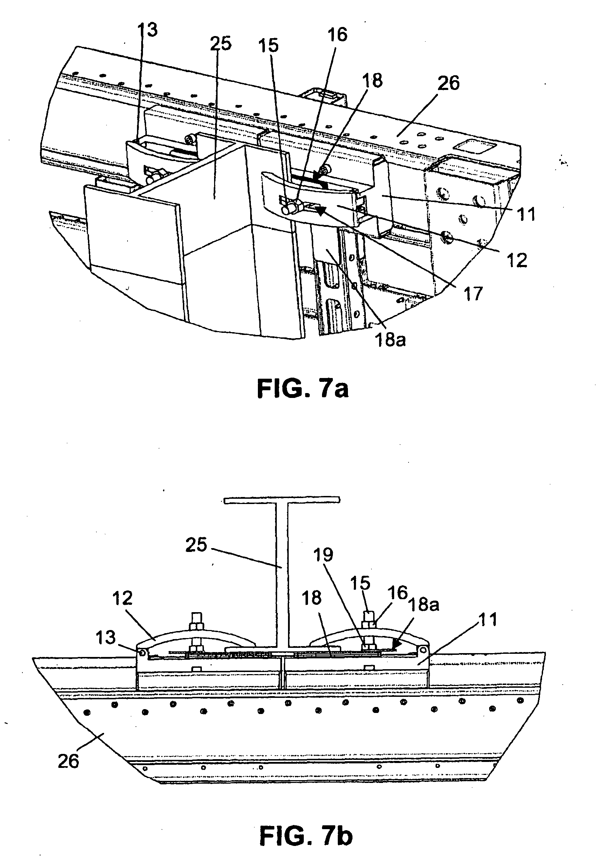

By way of illustration, the present invention not being limited thereto, different features and advantages of embodiments of the present invention will be illustrated below. Fig. 2 and Fig. 3 illustrate an exemplary clamping system 10 according to an embodiment of the present invention. The clamping system 10 comprises a body 11 adapted for being connected to the display device, e.g. screen. The body 11 of the clamping system 10 may be formed of any suitable material known by a person skilled in the art such as e.g. metals like steel, plastics, etc. For example, materials like stainless steel, steel or aluminium may be used for forming the body 11 of the clamping system 10. The body 11 preferably may be rigid. It may be deformation resistant. Attached to the body 11, the clamping system 10 comprises a clamp 12 for connecting the display device, e.g. screen to the support. The display device may be part of a tiled display wall, it may be a separate display device or it may be a part of another type of display assembly. According to an embodiment of the present invention, the clamp 12 is fixed to the body 11 or is adapted to be moveably fixed to the body 11 during all steps of the assembly. The latter allows a more easy mounting of the clamping system as it reduces the number of components to be handled during mounting. The clamp 12 may be pivotably mounted to the body 11 such that it can move around a hinge 13 from an open to a closed position (see further with respect to Fig. 6a, Fig. 6b, Fig. 7a and Fig. 7b). The clamp 12 may be formed of any suitable material known by a person skilled in the art such as e.g. metals, plastics, etc. For example, materials like stainless steel, steel or aluminium may be used for forming the clamp 12 of the clamping system 10. According to embodiments of the invention, the body 11 and the clamp 12 may be formed of a same material. According to other embodiments of the invention, the body 11 and the clamp 12 may be formed of a different material.

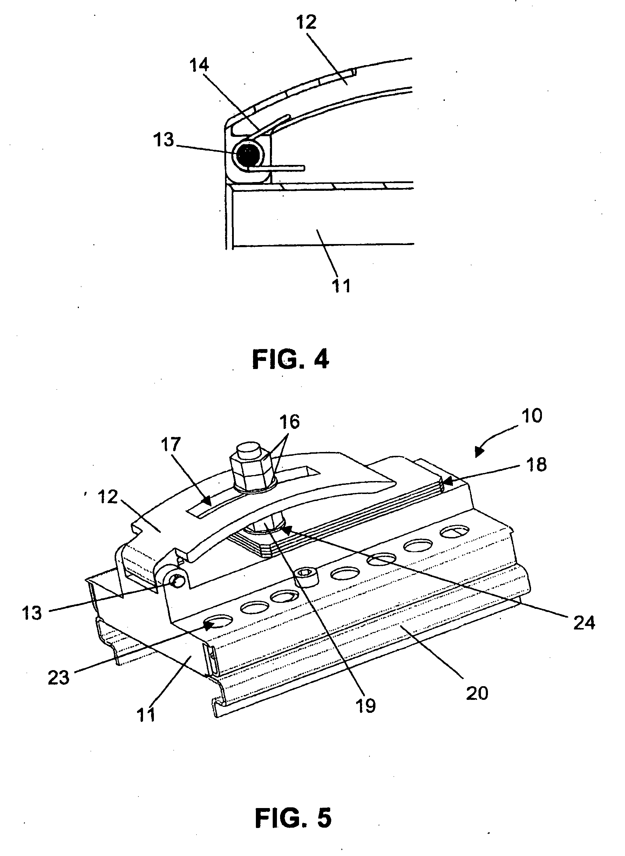

The clamping system 10 furthermore optionally may comprise a clamp opening means 14 for keeping the clamp 12 in an open position when not in use. According to embodiments of the invention, the clamp opening means 14 may be a spring, e.g. torsion spring. The spring 14 may be positioned in the vicinity of the hinge 13 as is shown in Fig. 4. According to an embodiment of the present invention, the opening means 14 may be integrated in the clamping system 10. With being integrated in the clamping system 10, there is meant that the opening means 14 is not a separate part but forms part of the clamping system 10 or that the opening means 14 is adapted to be fixed or moveably fixed to the clamping system, at all stages of the mounting of the clamping system 10.

For closing the clamp 12, the clamping system 10 comprises, according to embodiments of the present invention, a closing means which is integrated in the clamping system 10. With being integrated in the clamping system 10 there is meant that the closing means is not a separate part but forms part of the clamping system 10, or that the closing means is adapted to be fixed or moveably fixed to the clamping system, at all stages of the assembly of the display device to the frame using the clamping system 10. According to embodiments of the invention and as illustrated in Fig. 2 and 3, the closing means may be a threaded rod 15 with at least one nut 16. Therefore, in the further description, the clamping system according to embodiments of the invention will be described by means of a threaded rod 15 as the closing means. It has to be understood that this is not intended to limit the invention in any way and that other closing means such as e.g. integrated nut and bolds, integrated screws, integrated fasteners, etc. can also be used with embodiments of the present invention.

In embodiments, wherein the closing means comprises a threaded rod, such a threaded rod 15 may extend from the body 11 of the clamping system 10 through an opening 17 in the clamp 12. The opening 17 in the clamp 12 and the threaded rod 15 may be designed and/or chosen such that the dimensions of the opening 17 are larger than the diameter of the threaded rod 15 such that the threaded rod 15 can extend through the opening 17. At least one nut 16 may be provided on the threaded rod 15 for being turned on so as to close the clamp 12. In some embodiments, where an opening means is present, the action of closing the clamp may compensate and/or even overcome the force introduced by the opening means for opening the clamp. In an embodiment wherein the opening means comprises a spring providing a force such that the clamp may be opened when no counteraction is provided, closing the clamp may provide sufficient counteraction to compress the spring (see further). The size of the nut 16 may be such that it is at least slightly larger than the opening 17 in the clamp 12.

The clamping system 10 may comprise at least one integrated shimming means 18, such as for example a shim block or shim plate 18, in between the body 11 and the clamp 12 and in direct contact with the body 11. The shimming means may be used to fill gaps, to make something level or to adjust something to fit properly. The at least one integrated shimming means 18 may have as a purpose, when the clamping system 10 is used for connecting a display device, e.g. screen to a support, to compensate for a gap which may be formed between the support and the body 11 of the clamping system 10. The at least one integrated shimming means 18 may be rotatably mounted around the threaded rod 15, as can be seen from Fig. 2. A further nut 19 may be provided for keeping the at least one integrated shimming means 18 in place. According to embodiments of the invention, a plurality of shimming means 18, e.g. shim plates 18, for example four shim plates 18, may be provided. The shimming means 18 which may be used to compensate for a possible gap between the support and the body 11 can be moved to be between the support and the body 11 while shimming means 18 that are not needed can stay in the clamping system 10, as will be illustrated further. The at least one shimming means may be a shim plate 18 which may have a thickness of between 0.5 mm and 5 mm, for example 3 mm and may, for example, have a width of between 40 mm and 60 mm. The shimming means may have any suitable shape, such as for example a shim plate. The shape may be a flat shape, a tapered shape, etc. The shim plate 18 may be made of any suitable material, such as for example, wood, metal, plastic, etc.

According to embodiments of the invention, the clamping system 10 may furthermore comprise a sliding means 20 that fits in or on a rail of the display device, e.g. screen. The support may comprise a frame of beams, e.g. I-beams, which may be oriented in a direction substantially perpendicular to the orientation of the rails of the display device. For example, the beams may be oriented in a vertical direction while the rails of the display device are oriented in a horizontal direction. In that way, the display device, e.g. screen can be moved in a horizontal direction, i.e. from a left to a right side or vice versa (see further). It has to be understood, that according to other embodiments of the invention, the support may comprise a frame of beams which are oriented in a different direction, e.g. diagonal or horizontal direction. For example with horizontal beams in the frame, the rails of the display device, e.g. screen may be such that they are suitable for being in a vertical direction when the display device is mounted on the frame. In that case, the display device may be moved up or down.

The sliding means 20 may be attached to a lower side of the body 11 of the clamping system 10, i.e. to a side of the body 11 opposite to the side where the clamp 12 is positioned. This may be done by using any suitable fixing means such as e.g. bolts 21 and nuts 22, glue, welding, etc. as can be seen from Fig. 3. By partly loosening bolt 21, the clamping system 10 can be moved horizontally, i.e. from the left to the right of the drawing or vice versa. Fixation of the clamp 12 to the display device may be done by squeezing the display device between the plates 11 and 20 by fixing bolt 21.

According to embodiments of the invention, holes or openings 23 may be provide in the body 11 of the clamping system 10. These holes or openings 23 may be provided to decrease the weight of the clamping system 10. This is illustrated in Fig. 5.

Furthermore, according to embodiments of the invention, two or more nuts 16 instead of only one nut 16 as was the case in the embodiment illustrated in Fig. 2 and 3, may be provided on the threaded rod 15 for closing the clamp 12. This is also illustrated in Fig. 5. The use of two or more nuts 16 for closing the clamp 12 may prevent loosening and thus may prevent the clamp 12 from going to its open position when this is not required.

According to further embodiments of the invention, split washers 24 may be present in between the nuts 16, 19 and/or 22 and a surface of the clamp 12, a shim plate 18 and/or the body 11. For example, a split washer 24 may be present in between nut 16 and the clamp 12 and/or in between nut 19 and a shim plate 18 and/or in between nut 22 and the body 11.

It has to be noticed that, although the presence of holes or openings 23 in the body 11 of the clamping system 10, the use of more than one nut 16 for closing the clamp 12 and the presence of split washers 24 are illustrated on a same figure, these properties can be present independently of each other.

In a second aspect, the present invention also provides a method for connecting a display device 26, e.g. screen to a support 25 using a clamping system. The method comprises obtaining a clamping system 10 comprising a clamp 12 and an integrated closing means 15, 16. The clamping system advantageously may be a clamping system according to any of the embodiments of the first aspect, the present invention not being limited thereto. The method also comprises connecting the clamping system 10 to the display device 26 and connecting the clamping system 10 to the support 25 by moving the clamp 12 from an open position to a closed position by means of the integrated closing means 15, 16. It is to be noticed that the steps of connecting the clamping system to the display device and connecting the clamping system to the support may be performed in any order or even simultaneously.

Obtaining a clamping system 10 may be performed by either manufacturing a clamping system 10 or by taking a clamping system 10 that was ready made, the manufacturing then not being part of the method for connecting a display device.

Fig. 6a and Fig. 6b show a clamping system 10 as can be used in methods according to embodiments of the present invention in an open position and also illustrates an embodiment according to the first aspect of the present invention. In Fig. 6a and Fig.6b the clamping system 10 may be connected to the display device 26, e.g. screen. This may, for example, be done by fitting a sliding means 20 in or on a rail of the display device 26, e.g. screen such that the display device 26 can be moved in a horizontal direction, i.e. from a left to a right side or vice versa. When not in use, the clamp 12 is in its open position as can be clearly seen from Fig. 6b. The open position is obtained by the presence of the clamp opening means 14 which may, for example, be a spring such as a torsion spring.

In another step, the clamping system 10 may be connected to the support 25. This is done by first positioning the support 25 such that part of it is positioned in between the clamp 12 and the body 11, as can be seen from Fig. 6a and Fig. 6b. Next, the clamp 12 is moved from its open position to its closed position by means of the integrated closing means 15, 16, in the example given by turning on the nut 16 on the threaded rod 15. By doing so, the clamp 12 is closed, thereby compressing the clamp opening means 14, e.g. spring.

According to embodiments of the invention, before closing the clamp 12, at least one shim plate 18 may be positioned in between the support 25 and the body 11 of the clamping system 10 so as to compensate for a possible gap that may exist between the body 11 and the support 25. In the example given, three shim plates 18 are moved to be in between the body 11 and the support 25 and one shim plate 18a is kept in the clamping system 10. It has to be understood that according to embodiments of the invention the clamping system 10 may comprise any number of shim plates 18 and that for connecting the clamping system 10 according to embodiments of the invention to a support 25 any number of shim plates 18 may be used and consequently any number of shim plates 18 may be kept in the clamping system 10 or in other words, may stay un-used.

It has to be understood that, although in the above description the clamping system 10 is first connected to the display device 26 and then to the support 25, according to other embodiments of the invention the clamping system 10 may first be connected to the support 25 before it is connected to the display device 26.

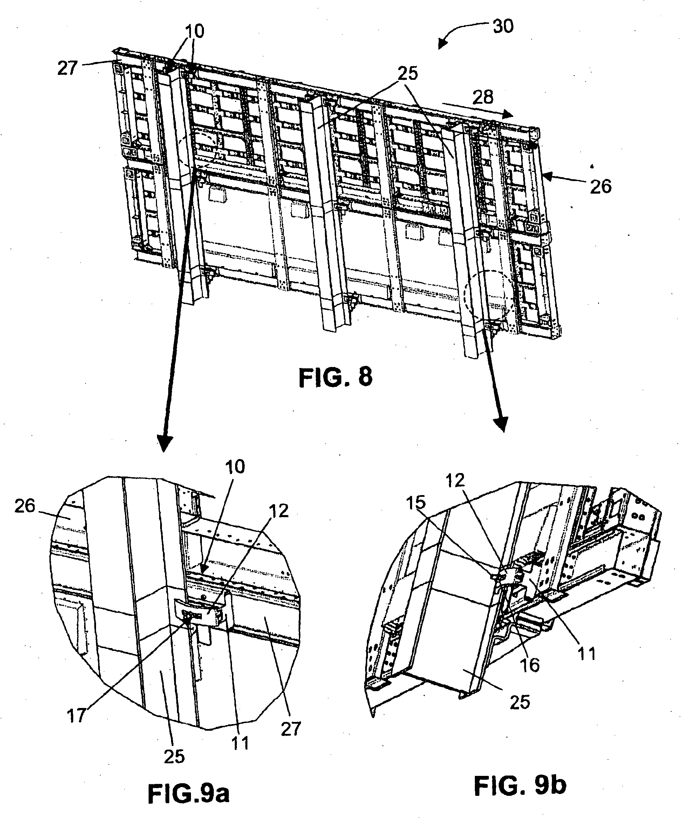

In a further aspect, the present invention also provides a display device system 30 comprising a display device 26 connected to a support 25 by using at least one clamping system 10 according to embodiments of the invention. Fig. 8 illustrates a display device system 30 according to an embodiment of the present invention. Fig. 9a, Fig. 9b, Fig. 10 and Fig. 11 show details of a display device system 30 according to embodiments of the invention. A clamping system 10 according to embodiments of the first aspect of the invention is used to connect a display device 26 to a support 25, in the example given to a frame of beams, more particularly in the present example being I-beams. The clamping system 10 may be any kind of clamping system 10 according to the different embodiments described above. The display device 16 may for example comprise rails 27 and the body 11 of the clamping system 10 may comprise sliding means 20 which fits in or on the rail 27 of the display device 26, e.g. screen (see also Fig. 9a, Fig. 10 and Fig. 11). The support 25 may comprise a frame of beams, e.g. I-beams, which may be oriented in a direction substantially perpendicular to the orientation of the rails 27 of the display device 26. In the example given, the I-beams may be oriented in a vertical direction while the rails 27 of the display device 26 are oriented in a horizontal direction. In that way, the display device 26, e.g. screen can be moved, in the example given in a horizontal direction, i.e. from a left to a right side or vice versa (indicated by arrow 28 in Fig. 8). It has to be understood, that according to other embodiments of the invention, the support 25 may comprise a frame of I-beams which are oriented in a horizontal direction and the rails 27 of the display device 26, e.g. screen may be vertical direction. In that case, the display device 26 may be moved up or down.

From Fig. 9a it can be seen that the clamp 12 of the clamping system 10 is connected to the support 25, in the example given to an I-beam. The clamp system 10 as described may only deal with forces in a direction substantially perpendicular to the plane of the wall (display device). Forces induced by gravity may advantageously be dealt with by the system which can be seen in 9b (indicated by reference number 30).

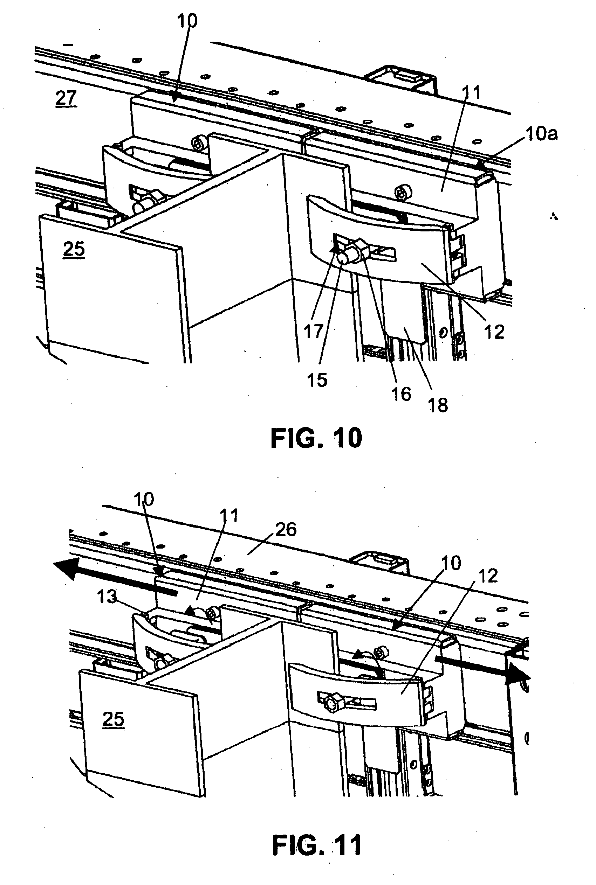

As can be seen from Fig. 10 (clamp 12 in closed position) and Fig. 11 (clamp 12 in open position), according to embodiments of the invention, two clamping systems 10a and 10b may be used for connecting part of a support 25, e.g. I-beam to the display device 26. In the example given, a clamping system 10a, 10b may be provided at both sides of the I-beam 25.

In yet a further aspect of the invention, a method is provided for making a clamping system 10. The method comprises obtaining a body 11 adapted for being connected to a display device 26, e.g. screen, providing a clamp 12 for connecting the clamping system 10 to a support 25, providing closing means 15, 16 for closing the clamp 12 when connecting the clamping system 10 to the support 25, optionally providing a clamp opening means 14 for keeping the clamp 12 in an open position when not in use. Providing closing means 15, 16 and optionally providing a clamp opening means 14 is performed such that the closing means 15, 16 and optionally the clamp opening means 14 are integrated in the clamping system 10.

It is to be understood that although preferred embodiments, specific constructions and configurations, as well as materials, have been discussed herein for devices according to the present invention, various changes or modifications in form and detail may be made without departing from the scope of this invention as defined by the appended claims.

## Claims

1. A clamping system (10) for connecting a display device (26) to a support (25), the clamping system (10) comprising:
- a body (11) adapted for being connected to the display device (26),
- a clamp (12) for connecting the clamping system (10) to the support (25), and
- closing means (15, 16) for closing the clamp (12) when connecting the clamping system (10) to the support (25), the closing means (15) being integrated in the clamping system (10),
**characterised in that** the clamping system (10) furthermore comprises an integrated clamp opening means (14) for keeping the clamp (12) in an open position when not in use.

2. A clamping system (10) according to claim 1, wherein the clamp (12) is pivotably mounted to the body (11).

3. A clamping system (10) according to claim 1, furthermore comprising at least one integrated shim plate (18) rotatably mounted around the closing means (15).

4. A Clamping device according to any of the previous claims, wherein the closing means (15, 16) extends from the body (11) through an opening (17) in the clamp (12).

5. A clamping system (10) according to any of the previous claims, wherein the body (11) comprises sliding means (20) for fitting in or on a support fixed to the display device.

6. A clamping system (10) according to any of the previous claims, wherein at least one opening (23) is provided in the body (11).

7. A clamping system (10) according to any claims 3 to 6, furthermore comprising a nut (19) for putting the at least one shim plate (18) in a fixed position.

8. A clamping system (10) according to any of the previous claims, wherein the closing means (15, 16) comprising a threaded rod (15) and at least one nut (16).

9. A clamping system (10) according to any of the previous claims, wherein the clamp opening means (14) is a spring.

10. A display device system (30) comprising a display device (26) connected to a support (25) using at least one clamping system (10) according to any of claims 1 to 9.

11. Method for connecting a display device (26) to a support (25), the method comprising: connecting one part of the clamping system (10) to the display device (26), and
- connecting another part of the clamping system (10) to the support (25) by moving the clamp (12) from an open position to a closed position by means of the integrated closing means (15, 16),
**characterised in that** the method furthermore comprises, before performing the connecting steps, obtaining a clamping system (10) comprising a clamp (12), an integrated closing means (15, 16) for closing the clamp (12) and an integrated clamp opening means (14) for keeping the clamp (12) in an open position when not in use.

12. Method according to claim 11, wherein connecting one part of the clamping system (10) to the display device (26) is performed by fitting a sliding means (20) of the clamping system (10) in or on a support which is fixed to the display device (26).

13. Method according to claim 11 or 12, the clamping system (10) having a body (11), wherein, before moving the clamp (12) from an open position to a closed position by means of the integrated closing means (15, 16), the method furthermore comprises positioning at least one shim plate (18) in between the support (25) and the body (11) of the clamping system (10).

14. A method for making a clamping system (10), the method comprising:
- obtaining a body (11) adapted for being connected to a display device (26),
- providing a clamp (12) for connecting the clamping system (10) to a support (25), and
- providing closing means (15, 16) for closing the clamp (12) when connecting the clamping system (10) to the support (25), wherein providing closing means (15, 16) is performed such that the closing means (15, 16) is integrated in the clamping system (10),
**characterised in that** the method furthermore comprises providing a clamp opening means (14) for keeping the clamp (12) in an open position when not in use, wherein providing a clamp opening means (14) is performed such that the clamp opening means (14) is integrated in the clamping system (10).

15. Method according to claim 14, wherein providing a clamp (12) is performed by pivotably mounting the clamp (12) to the body (11).

16. Method according to claim 14 or 15, furthermore comprising providing at least one integrated shim plate (18) rotatably mounted around the closing means (15).

17. Method according to any of claims 14 to 16, furthermore comprising providing at least one opening (23) in the body (11).

18. Method according to any of claims 14 to 17, wherein providing closing means (15, 16) is performed by providing a threaded rod (15) and at least one nut (16).

19. Method according to any of claims 14 to 18, wherein providing a clamp opening means (14) is performed by providing a spring.

## Patentansprüche

1. Klemmsystem (10) zum Verbinden einer Anzeigevorrichtung (26) mit einem Träger (25), wobei das Klemmsystem (10) umfasst :
- einen Körper (11), der dazu ausgebildet ist, mit der Anzeigevorrichtung (26) verbunden zu werden,
- eine Klemme (12) zum Verbinden des Klemmsystems (10) mit dem Träger (25) und
- ein Verschlusselement (15, 16) zum Schließen der Klemme (12), wenn das Klemmsystem (10) mit dem Träger (25) verbunden wird, wobei das Verschlusselement (15) in das Klemmsystem (10) integriert ist,
**dadurch gekennzeichnet, dass** das Klemmsystem (10) des Weiteren ein integriertes Klemmenöffnungselement (14) umfasst, um die Klemme (12) in einer offenen Position zu halten, wenn diese nicht in Gebrauch ist.

2. Klemmsystem (10) nach Anspruch 1, wobei die Klemme (12) schwenkbar an dem Körper (11) montiert ist.

3. Klemmsystem (10) nach Anspruch 1, des Weiteren umfassend mindestens eine integrierte Unterlegscheibe (18), die drehbar um das Verschlusselement (15) montiert ist.

4. Klemmvorrichtung nach einem der vorangehenden Ansprüche, wobei sich das Verschlusselement (15, 16) vom Körper (11) aus durch eine Öffnung (17) in der Klemme (12) erstreckt.

5. Klemmsystem (10) nach einem der vorangehenden Ansprüche, wobei der Körper (11) ein Gleitelement (20) umfasst, das in oder auf einem Träger angebracht ist, der an der Anzeigevorrichtung befestigt ist.

6. Klemmsystem (10) nach einem der vorangehenden Ansprüche, wobei mindestens eine Öffnung (23) im Körper (11) vorgesehen ist.

7. Klemmsystem (10) nach einem der Ansprüche 3 bis 6, des Weiteren umfassend eine Mutter (19), um die mindestens eine Unterlegscheibe (18) in eine fixierte Position zu bringen.

8. Klemmsystem (10) nach einem der vorangehenden Ansprüche, wobei das Verschlusselement (15, 16) eine Gewindestange (15) und mindestens eine Mutter (16) umfasst.

9. Klemmsystem (10) nach einem der vorangehenden Ansprüche, wobei das Klemmenöffnungselement (14) eine Feder ist.

10. Anzeigevorrichtungssystem (30), umfassend eine Anzeigevorrichtung (26), die mit einem Träger (25) unter Verwendung mindestens eines Klemmsystems (10) nach einem der Ansprüche 1 bis 9 verbunden ist.

11. Verfahren zum Verbinden einer Anzeigevorrichtung (26) mit einem Träger (25), wobei das Verfahren umfasst:
- Verbinden eines Teils des Klemmsystems (10) mit der Anzeigevorrichtung (26) und
- Verbinden eines anderen Teils des Klemmsystems (10) mit dem Träger (25) durch Bewegen der Klemme (12) mittels des integrierten Verschlusselements (15, 16) aus einer offenen Position in eine geschlossene Position,
**dadurch gekennzeichnet, dass** das Verfahren des Weiteren vor dem Ausführen der Verbindungsschritte das Erhalten eines Klemmsystems (10) umfasst, das eine Klemme (12) ein integriertes Verschlusselement (15, 16)zum Schließen der Klemme (12) und ein integriertes Klemmenöffnungselement (14), um die Klemme (12) in einer offenen Position zu halten, wenn diese nicht in Gebrauch ist.

12. Verfahren nach Anspruch 11, wobei das Verbinden eines Teils des Klemmsystems (10) mit der Anzeigevorrichtung ausgeführt wird, indem ein Gleitelement (20) des Klemmsystems (10) in oder auf einem Träger angebracht wird, der an der Anzeigevorrichtung befestigt ist.

13. Verfahren nach Anspruch 11 oder 12, wobei das Klemmsystem (10) einen Körper (11) aufweist, wobei, bevor die Klemme (12) mittels des integrierten Verschlussmittelelements (15, 16) aus einer offenen Position in eine geschlossene Position bewegt wird, das Verfahren des Weiteren das Positionieren mindestens einer Unterlegscheibe (18) zwischen dem Träger (25) und dem Körper (11) des Klemmsystems (10) umfasst.

14. Verfahren zum Herstellen eines Klemmsystems (10), wobei das Verfahren umfasst:
- Erhalten eines Körpers (11), der zum Verbinden mit einer Anzeigevorrichtung (26) ausgebildet ist,
- Vorsehen einer Klemme (12) zum Verbinden des Klemmsystems (10) mit einem Träger (25) und
- Vorsehen eines Verschlussmittels (15, 16) zum Schließen der Klemme (12), wenn das Klemmsystem (10) mit dem Träger (25) verbunden wird, wobei das vorsehen des Verschlussmittels (15, 16) so ausgeführt wird, dass das Verschlussmittel (15, 16) in Klemmsystem (10) integriert ist,
**dadurch gekennzeichnet, dass** das Verfahren des Weiteren das Vorsehen eines Klemmenöffnungselements (14) umfasst, um die Klemme (12) in einer offenen Position zu halten, wenn diese nicht in Gebrauch ist, wobei das Vorsehen eines Klemmenöffnungselements (14) so ausgeführt wird, dass das Klemmenöffnungselement (14) in dem Klemmsystem (10) integriert ist.

15. Verfahren nach Anspruch 14, wobei das Vorsehen einer Klemme (12) durch schwenkbares Montieren der Klemme (12) an dem Körper (11) ausgeführt wird.

16. Verfahren nach Anspruch 14 oder 15, des Weiteren umfassend das Vorsehen mindestens einer integrierten Unterlegscheibe (18), die drehbar um das Verschlusselement (15) montiert ist.

17. Verfahren nach einem der Ansprüche 14 bis 16, des Weiteren umfassend das Vorsehen mindestens einer Öffnung (23) im Körper (11).

18. Verfahren nach einem der Ansprüche 14 bis 17, wobei das Vorsehen eines Verschlusselements (15, 16) durch Vorsehen einer Gewindestange (15) und mindestens einer Mutter (16) ausgeführt wird.

19. Verfahren nach einem der Ansprüche 14 bis 18, wobei das Vorsehen eines Klemmenöffnungselements (14) durch Vorsehen einer Feder ausgeführt wird.

## Revendications

1. Système de fixation (10) pour relier un dispositif d'affichage (26) à un support (25), le système de fixation (10) comprenant :
- un corps (11) conçu pour être relié au dispositif d'affichage (26),
- une attache (12) pour relier le système de fixation (10) au support (25), et
- un moyen de fermeture (15, 16) pour fermer l'attache (12) en reliant le système de fixation (10) au support (25), le moyen de fermeture (15) étant intégré dans le système de fixation (10),
**caractérisé en ce que** le système de fixation (10) comprend en outre un moyen d'ouverture d'attache intégré (14) pour conserver l'attache (12) dans une position ouverte quand elle n'est pas utilisée.

2. Système de fixation (10) selon la revendication 1, dans lequel l'attache (12) est montée de manière pivotante sur le corps (11).

3. Système de fixation (10) selon la revendication 1, comprenant en outre au moins une plaque de calage intégrée (18) montée en rotation autour du moyen de fermeture (15).

4. Dispositif de fixation selon l'une quelconque des revendications précédentes, dans lequel le moyen de fermeture (15, 16) s'étend à partir du corps (11) à travers une ouverture (17) dans l'attache (12).

5. Système de fixation (10) selon l'une quelconque des revendications précédentes, dans lequel le corps (11) comprend un moyen de coulissement (20) pour s'ajuster dans ou sur un support fixé au dispositif d'affichage.

6. Système de fixation (10) selon l'une quelconque des revendications précédentes, dans lequel au moins une ouverture (23) est prévue dans le corps (11).

7. Système de fixation (10) selon l'une quelconque des revendications 3 à 6, comprenant en outre un écrou (19) pour positionner l'au moins une plaque de calage (18) dans une position fixe.

8. Système de fixation (10) selon l'une quelconque des revendications précédentes, dans lequel le moyen de fermeture (15, 16) comprend une tige filetée (15) et au moins un écrou (16).

9. Système de fixation (10) selon l'une quelconque des revendications précédentes, dans lequel le moyen d'ouverture d'attache (14) est un ressort.

10. Système de dispositif d'affichage (30) comprenant un dispositif d'affichage (26) relié à un support (25) utilisant au moins un système de fixation (10) selon l'une quelconque des revendications 1 à 9.

11. Procédé pour relier un dispositif d'affichage (26) à un support (25), le procédé comprenant :
- la connexion d'un élément du système de fixation (10) au dispositif d'affichage (26), et
- la connexion d'un autre élément du système de fixation (10) au support (25) en déplaçant l'attache (12) d'une position ouverte à une position fermée à l'aide du moyen de fermeture intégré (15, 16),
**caractérisé en ce que** le procédé comprend en outre, avant d'effectuer les étapes de connexion, l'obtention d'un système de fixation (10) comprenant une attache (12), un moyen de fermeture intégré (15, 16) pour fermer l'attache (12) et un moyen d'ouverture d'attache intégré (14) pour conserver l'attache (12) dans une position ouverte quand elle n'est pas utilisée.

12. Procédé selon la revendication 11, dans lequel la connexion d'un élément particulier du système de fixation (10) au dispositif d'affichage (26) est effectuée en ajustant un moyen de coulissement (20) du système de fixation (10) dans ou sur un support qui est fixé au dispositif d'affichage (26).

13. Procédé selon la revendication 11 ou 12, le système de fixation (10) ayant un corps (11), dans lequel, avant le déplacement de l'attache (12) d'une position ouverte à une position fermée à l'aide du moyen de fermeture intégré (15, 16), le procédé comprend en outre le positionnement d'au moins une plaque de calage (18) au milieu du support (25) et du corps (11) du système de fixation (10).

14. Procédé pour fabriquer un système de fixation (10), le procédé comprenant :
- l'obtention d'un corps (11) conçu pour être relié à un dispositif d'affichage (26),
- la fourniture d'une attache (12) pour relier le système de fixation (10) à un support (25), et
- la fourniture d'un moyen de fermeture (15, 16) pour fermer l'attache (12) en reliant le système de fixation (10) au support (25), dans lequel la fourniture du moyen de fermeture (15, 16) est effectuée de sorte que le moyen de fermeture (15, 16) est intégré dans le système de fixation (10),
**caractérisé en ce que** le procédé comprend en outre la fourniture d'un moyen d'ouverture d'attache (14) pour conserver l'attache (12) dans une position ouverte quand elle n'est pas utilisée, dans lequel la fourniture d'un moyen d'ouverture d'attache (14) est effectuée de sorte que le moyen d'ouverture d'attache (14) est intégré dans le système de fixation (10).

15. Procédé selon la revendication 14, dans lequel la fourniture d'une attache (12) est effectuée en montant de manière pivotante l'attache (12) au corps (11).

16. Procédé selon la revendication 14 ou 15, comprenant en outre la fourniture d'au moins une plaque de calage intégrée (18) montée en rotation autour du moyen de fermeture (15).

17. Procédé selon l'une quelconque des revendications 14 à 16, comprenant en outre la fourniture d'au moins une ouverture (23) dans le corps (11).

18. Procédé selon l'une quelconque des revendications 14 à 17, dans lequel la fourniture du moyen de fermeture (15, 16) est effectuée en fournissant une tige filetée (15) et au moins un écrou (16).

19. Procédé selon l'une quelconque des revendications 14 à 18, dans lequel la fourniture d'un moyen d'ouverture d'attache (14) est effectuée en fournissant un ressort.
